# FASCICULE DE BREVET EUROPEEN

(11) **EP 4 031 350 B1**
(45) Date de publication et mention de la délivrance du brevet: **12.07.2023**
(21) Numéro de dépôt: 20771885.9
(22) Date de dépôt: 18.09.2020
(51) Int. Cl.: B29C 49/56, B29C 49/02, B29C 49/06, B29C 49/36, B29L 31/00

(54) **UNITE DE MOULAGE A VERROUILLAGE PAR CROCHETS**
FORMEINHEIT MIT VERRIEGELUNG MITTELS HAKEN
MOULDING UNIT WITH LOCKING BY MEANS OF HOOKS

(30) Priorité: 19.09.2019 FR 1910311
(43) Date de publication de la demande: 27.07.2022
(73) Titulaire: Sidel Participations, 76930 Octeville-sur-Mer (FR)
(72) Inventeur: SAVARY, Cyrille, 76930 Octeville-sur-Mer (FR)
(74) Mandataire: Sidel Group
(86) Numéro de dépôt international: PCT/EP2020/076118
(87) Numéro de publication internationale: WO 2021/053151

(56) Documents cités:
- EP-A1- 2 942 179
- EP-A1- 3 431 253
- DE-U1-202016 008 463
- US-A1- 2012 286 455

## Description

### Domaine technique de l'invention

L'invention concerne une unité de moulage de récipients, notamment par soufflage de préformes en matériau thermoplastique, qui comporte
- un premier support de moule et un deuxième support de moule qui sont destinés à porter chacun une partie d'un moule, les supports de moule étant articulés l'un par rapport à l'autre autour d'un axe vertical de charnière entre une position ouverte et une position fermée ;
- un dispositif de verrouillage des supports de moule en position fermée qui comporte au moins un crochet de verrouillage monté pivotant autour d'un axe de pivotement sur le deuxième support de moule entre une position verrouillée dans laquelle il est accrochée transversalement derrière une face de blocage fixe du premier support de moule et une position déverrouillée dans laquelle l'au moins un crochet de verrouillage est escamoté pour autoriser l'ouverture des supports de moule.

Les documents EP2942179A1, DE202016008463U1, US2012/286455A1 et EP3431253A1 décrivent des unités de moulage de récipients selon l'art antérieur.

### Arrière-plan technique

L'invention concerne une unité de moulage destinée à équiper une station de formage de récipients en matériau thermoplastique en grandes séries. Dans une telle station, des préformes chaudes sont conformées en récipients finaux par soufflage dans des moules. De manière connue, chaque moule est réalisé en au moins deux parties qui sont susceptibles d'être jointes pour reconstituer une empreinte complète du récipient à produire.

Chaque moule est monté dans une unité de moulage associée. Pour permettre de produire des récipients de modèles différents, chaque partie de moule est fixée de manière démontable dans un support de moule associé de l'unité de moulage. Les supports de moule sont montés pivotant l'un par rapport à l'autre par l'intermédiaire d'un axe vertical de charnière entre une position ouverte, dans laquelle les deux parties de moules sont écartées, et une position fermée, dans laquelle les deux parties de moule sont jointes. Lorsqu'on souhaite changer de modèle de récipient, il suffit de démonter les moules actuels des supports de moule pour les remplacer par de nouveaux moules.

Pour permettre la réalisation de récipients en grandes séries, plusieurs unités de moulage sont portées à la périphérie d'un carrousel rotatif qui tourne en continu. Les préformes sont reçues dans les moules en un point d'entrée déterminé, tandis que les récipients sont extraits des moules en un point de sortie déterminé.

Pour permettre l'insertion d'une nouvelle préforme et l'extraction d'un récipient fini, les supports de moule sont commandés dans leur position ouverte. Ainsi, durant leur trajet sur un secteur angulaire s'étendant depuis le point de sortie jusqu'au point d'entrée, les moules sont maintenus en position ouverte.

Les préformes sont conformées en récipients dans les unités de moulage par soufflage ou étirage-soufflage durant leur transport depuis le point d'entrée jusqu'au point de sortie. Durant tout leur trajet depuis le point d'entrée jusqu'au point de sortie, il est impératif que les supports de moule occupent une position fermée dans laquelle les deux parties de moule sont jointes.

En effet, pour éviter d'endommager les moules lors de leur fermeture, au moins l'une des deux parties de moule est montée flottante avec un jeu limité sur son support de moule. Pendant le soufflage, un fluide comprimé à la même pression que le fluide de soufflage, par exemple 40 bars, est injecté dans une chambre de compensation comprise entre le support de moule et la partie de moule flottante pour plaquer cette dernière contre l'autre partie de moule. Ceci permet d'obtenir des récipients avec un plan de joint peu visible.

Or, si les supports de moule ne sont pas maintenus dans leur position fermée au moment où le fluide sous pression est injecté dans la chambre de compensation, la partie de moule flottante est poussée par la pression avec une force suffisante pour arracher ses moyens de fixation sur le support de moule. La partie de moule peut ainsi être éjectée. Une telle partie de moule peut peser jusqu'à plusieurs dizaines de kilogrammes. L'éjection de la partie de moule risque ainsi de provoquer des dommages conséquents à la station de formage et de mettre en danger l'intégrité physique des opérateurs humains situés à proximité.

Pour garantir que les deux parties de moule soient bien jointes sans provoquer l'ouverture des supports de moule, ces derniers sont verrouillés en position fermée par un dispositif de verrouillage commandé. Le dispositif de verrouillage comporte un organe de verrouillage qui est monté mobile sur l'un des supports de moule entre une position verrouillée dans laquelle il coopère avec une face de blocage de l'autre des supports de moule pour empêcher l'ouverture des supports de moule et une position déverrouillée dans laquelle l'organe de verrouillage est escamoté par rapport à la face de blocage pour autoriser l'ouverture des supports de moule.

Les déplacements de l'organe de verrouillage entre ses deux positions verrouillée et déverrouillée sont généralement commandés au moyen d'un dispositif de commande à came. Une came est agencée de manière fixe sur une base fixe sur laquelle le carrousel est monté rotatif, tandis que le support de moule équipé de l'organe de verrouillage comporte un suiveur de came qui est lié à l'organe de verrouillage et qui commande les déplacements de l'organe de verrouillage par coopération avec la came. Il est notamment connu que les organes de verrouillage soient formés par des doigts de verrouillage d'axe verticaux montés coulissants verticalement sur l'un des supports de moule. Les doigts sont destinés à être reçus dans des orifices portés par des oreilles de l'autre support de moule. Un tel dispositif permet d'obtenir un verrouillage stable et robuste des supports de moule dans leur position fermée malgré à l'effort de réaction très important appliqué aux supports de moule pendant l'opération de soufflage.

Pour que le dispositif de verrouillage fonctionne correctement, il est nécessaire de lubrifier régulièrement les différents éléments coulissants pour éviter leur grippage. De telles opérations de maintenance requièrent d'arrêter fréquemment, par exemple toutes les semaines, la station de formage pendant une durée non négligeable, par exemple 1 à 2 heures. Pour une station de soufflage de ce type, qui est capable de produire plusieurs milliers de récipients par heure, une telle durée d'immobilisation entraîne un manque à gagner pour le fabricant de récipient.

Par ailleurs, les oreilles et/ou les doigts de verrouillage dépassent généralement transversalement vers l'autre support de moule. Il est donc nécessaire d'ouvrir très largement les supports de moule lorsqu'on éjecte un récipient après soufflage pour éviter que celui-ci ne vienne buter contre des composants du dispositif de verrouillage. Il en résulte que le nombre d'unités de moulage susceptibles d'être agencées à la périphérie du carrousel est limité par l'encombrement pris par chaque unité de moulage en position ouverte.

Il est aussi connu d'équiper les unités de moulage avec des dispositifs de verrouillage à crochet. Le crochet est alors monté pivotant sur le bord libre d'un un des supports de moule autour d'un axe parallèle à son axe de charnière. Le crochet est destiné à venir s'accrocher derrière une face de blocage qui borde le bord libre de l'autre des supports de moule. Un tel dispositif permet de libérer la totalité de l'espace entre les bords libres des supports de moule pour l'éjection des récipients finis. Il est ainsi possible de limiter l'ouverture des supports de moule par rapport à un dispositif de verrouillage à doigt. Cela permet notamment de munir la station de soufflage d'un plus grand nombre d'unités de moulage à diamètre égal.

Cependant, un tel dispositif de verrouillage ne permet pas d'obtenir un verrouillage stable et robuste des supports de moule en position fermée. En effet, l'axe de pivotement du crochet est généralement décalé longitudinalement par rapport à la face de blocage. Il en résulte que l'effort de réaction appliqué aux supports de moule pendant l'opération de soufflage produit un couple de pivotement du crochet vers sa position déverrouillée. Si les surfaces de contact entre le crochet et la face de blocage sont accidentellement enduite d'une substance lubrifiante, le crochet est susceptible de revenir en position déverrouillée pendant l'opération de soufflage, ce qui provoquerait l'ouverture brutale des supports de moule et probablement l'arrachement des moules.

En outre, les moyens de commande d'un tel dispositif de verrouillage à crochet nécessitent une commande à came horizontale. La came est donc soumise à des forces centrifuges pendant la rotation du carrousel.

### Résumé de l'invention

L'invention propose une unité de moulage de récipients, notamment par soufflage de préformes en matériau thermoplastique, qui comporte
- un premier support de moule et un deuxième support de moule qui sont destinés à porter chacun une partie d'un moule, les supports de moule étant articulés l'un par rapport à l'autre autour d'un axe vertical de charnière agencé le long d'un bord vertical arrière des supports de moule entre une position ouverte dans laquelle des bords libres verticaux avant des supports de moule sont écartés transversalement l'un de l'autre, et une position fermée dans laquelle lesdits bords libres sont en contact l'un de l'autre sur un plan de joint longitudinal vertical ;
- un dispositif de verrouillage des supports de moule en position fermée qui comporte au moins un crochet de verrouillage dont une extrémité crochue libre est équipée d'une face d'accrochage, l'au moins un crochet de verrouillage étant monté pivotant autour d'un axe de pivotement sur le deuxième support de moule entre une position verrouillée dans laquelle la face d'accrochage est accrochée transversalement derrière une face de blocage fixe du premier support de moule pour empêcher l'ouverture des support de moule par contact transversal et une position déverrouillée dans laquelle l'au moins un crochet de verrouillage est pivoté pour escamoter la face d'accrochage par rapport à la face de blocage pour autoriser l'ouverture des supports de moule ;
caractérisé en ce que l'axe de pivotement de l'au moins un crochet de verrouillage est situé dans un plan perpendiculaire à l'axe de charnière des moules.

Selon d'autres caractéristiques de l'invention :
- l'axe de pivotement de chaque crochet est agencé parallèlement au plan de joint des supports de moule ;
- chaque crochet de verrouillage présente un axe principal qui s'étend perpendiculairement à l'axe de pivotement jusqu'à l'extrémité crochue, et en ce qu'en position verrouillée, l'axe principal de chaque crochet de verrouillage s'étend dans une direction transversale, orthogonale au plan de joint, depuis l'axe de pivotement ;

- en position verrouillée, l'extrémité crochue s'étend transversalement de l'autre côté du plan de joint des supports de moule en position fermée par rapport à l'axe de pivotement ;
- la face d'accrochage de chaque crochet présente une forme de secteur cylindrique concave qui est tournée vers l'axe de pivotement et qui est défini par translation d'une droite génératrice parallèle à l'axe de pivotement ;
- la face de blocage présente une forme de secteur cylindrique convexe qui est tournée à l'opposé de l'axe de pivotement et qui est définie par translation d'une droite génératrice parallèle à l'axe de pivotement ;
- la face d'accrochage et la face de blocage présentent toutes les deux une forme de secteur cylindrique de révolution d'axe confondu avec l'axe de pivotement de chaque crochet ;
- la face d'accrochage présente un rayon de courbure plus grand que le rayon de courbure de la face de blocage de manière qu'en position verrouillée, la face d'accrochage soit en contact avec la face de blocage le long d'un zone de contact formée uniquement par une ligne longitudinale de tangence ;
- la face de blocage est portée par une pièce qui est fixée de manière ajustable en position transversale sur le premier support de moule ;
- l'unité de moulage comporte une pluralité de crochets répartis verticalement le long du bord libre du deuxième support de moule et coopérant chacun avec une face de blocage associée du premier support de moule ;
- les axes de pivotement des crochets sont agencés dans un même plan vertical longitudinal ;
- les crochets sont liés en mouvement par l'intermédiaire d'une bielle verticale qui est reliée à un corps de chacun des crochets de manière excentrée transversalement par rapport aux axes de pivotement ;
- la bielle comporte un galet suiveur de came d'axe de rotation longitudinal qui est destiné à coopérer avec une came de commande pour commander les crochets simultanément entre leur position verrouillée et leur position déverrouillée ;
- chaque crochet est monté pivotant sur le deuxième support de moule par l'intermédiaire d'un palier à roulement.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue de dessus qui représente schématiquement une station de formage embarquant des unités de moulage réalisées selon les enseignements de l'invention ;
[Fig. 2] La figure 2 est une vue en coupe selon le plan de coupe 2-2 de la figure 1 qui représente une unité de moulage de la station de formage ;
[Fig. 3] La figure 3 est une vue de dessus qui représente une unité de moulage de la station de formage dans laquelle les supports de moule sont dans une position fermée ;
[Fig. 4] La figure 4 est une vue similaire à celle de la figure 3 dans laquelle les supports de moule sont dans une position ouverte ;
[Fig. 5] La figure 5 est une vue de côté qui représente les supports de moule de la figure 3 en position fermée, un dispositif de verrouillage de l'unité de moulage étant en position verrouillée ;
[Fig. 6] La figure 6 est une vue similaire à celle de la figure 5 dans laquelle les supports de moule sont en position fermée, le dispositif de verrouillage occupant une position déverrouillée ;
[Fig. 7] La figure 7 est une vue similaire à celle de la figure 5 dans laquelle les supports de moule sont en position ouverte, le dispositif de verrouillage occupant une position déverrouillée ;
[Fig. 8] La figure 8 est une vue en coupe selon le plan de coupe 8-8 de la figure 5 qui représente un crochet du dispositif de verrouillage en position verrouillée derrière une face de blocage ;
[Fig. 9] La figure 9 est une vue en coupe selon le plan de coupe 9-9 de la figure 8 qui représente le crochet du dispositif de verrouillage en position verrouillée derrière une face de blocage ;
[Fig. 10] La figure 10 est une vue similaire à celle de la figure 9 qui représente le crochet du dispositif de verrouillage en position déverrouillée, les supports de moule étant en position fermée ;
[Fig. 11] La figure 11 est une vue en coupe selon un plan de coupe similaire à celui de la figure 8 qui représente une variante de réalisation de la face d'accrochage du crochet et de la face de blocage ;
[Fig. 12] La figure 12 est une vue en coupe selon un plan de coupe similaire à celui de la figure 8 qui représente une autre variante de réalisation de la face d'accrochage du crochet et de la face de blocage.

### Description détaillée de l'invention

Dans la suite de la description, des éléments présentant une structure identique ou des fonctions analogues seront désignés par une même référence.

Dans la suite de la description, on adoptera, à titre non limitatif et à titre de repère géométrique local pour chaque unité de moulage, des orientations :
- longitudinale "L" dirigée d'arrière en avant parallèlement au plan "P" de joint du moule en position jointe ;
- verticale "V" dirigée de bas en haut parallèlement à l'axe de la charnière des supports de moule ;
- transversale "T" dirigée de gauche à droite, orthogonalement au plan "P" de joint du moule en position jointe.

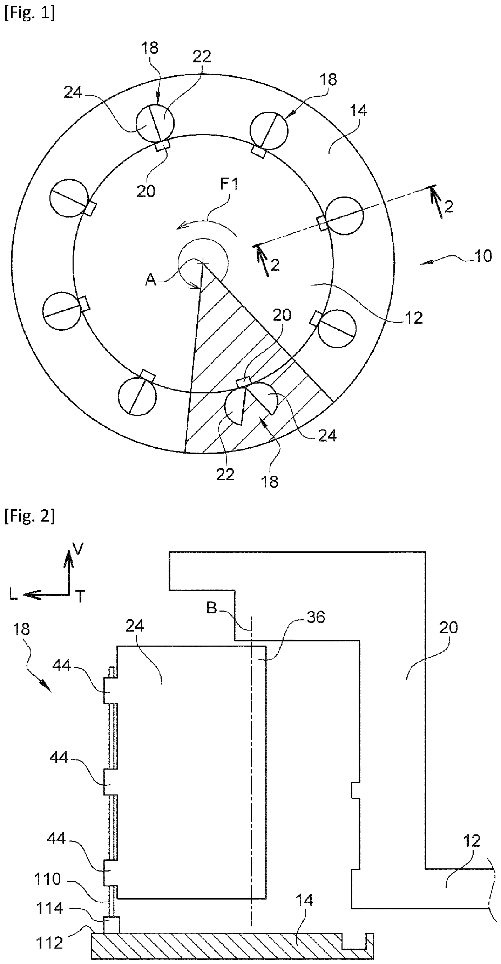

On a représenté de manière schématique à la figure 1 une station 10 de formage de récipients en matériau thermoplastique, notamment en polyéthylène téréphtalate (PET), par soufflage de préformes chaudes. Cette station 10 de formage est destinée à faire partie d'une installation de fabrication de récipients en grandes séries. Une telle installation comporte par exemple, outre la station 10 de formage, une station de chauffage de préformes froides.

La station 10 de formage comporte un carrousel 12 monté rotatif autour d'un axe "A" vertical sur une base 14 fixe par rapport au sol. Le carrousel 12 est ici entraîné en rotation continue dans un sens antihoraire, comme indiqué par la flèche "F1 ", par un moteur (non représenté). Le moteur tourne à une vitesse très élevée de manière que la station 10 de formage soit susceptible de produire au moins environ 2000 récipients par heure. Plusieurs unités 18 de moulage sont portées par le carrousel 12. Les unités 18 de moulage sont réparties régulièrement à la périphérie du carrousel 12. Chaque unité 18 de moulage est équipée de moyens individuels de moulage d'un récipient.

Chaque unité 18 de moulage est ici portée par une potence 20 fixée au carrousel 12, comme cela est illustré à la figure 2.

Chaque unité 18 de moulage comporte deux supports 22, 24 de moule qui sont montés mobiles sur le carrousel 12. Les supports 22, 24 de moule sont ici plus particulièrement montés sur la potence 20 associée.

Les unités 18 de moulage étant toutes identiques, l'invention sera décrite pour une unité 18 de moulage, l'invention étant applicable à toutes les unités de moulage.

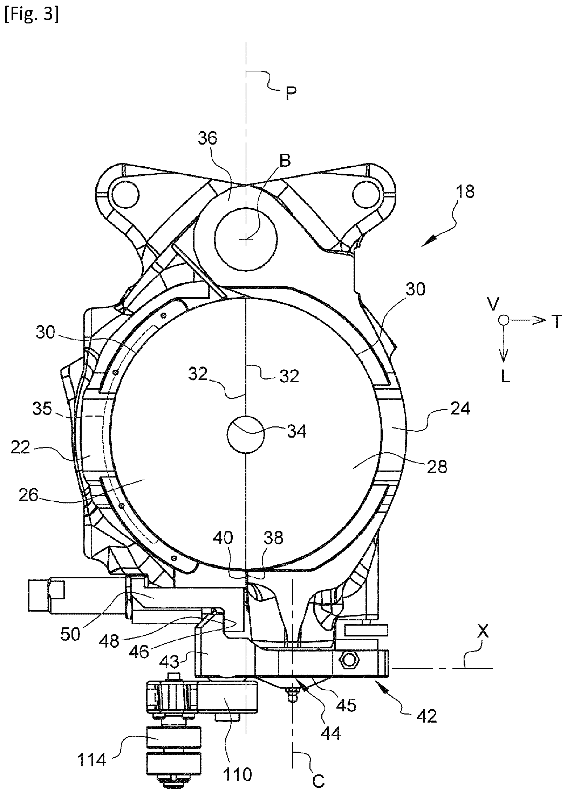

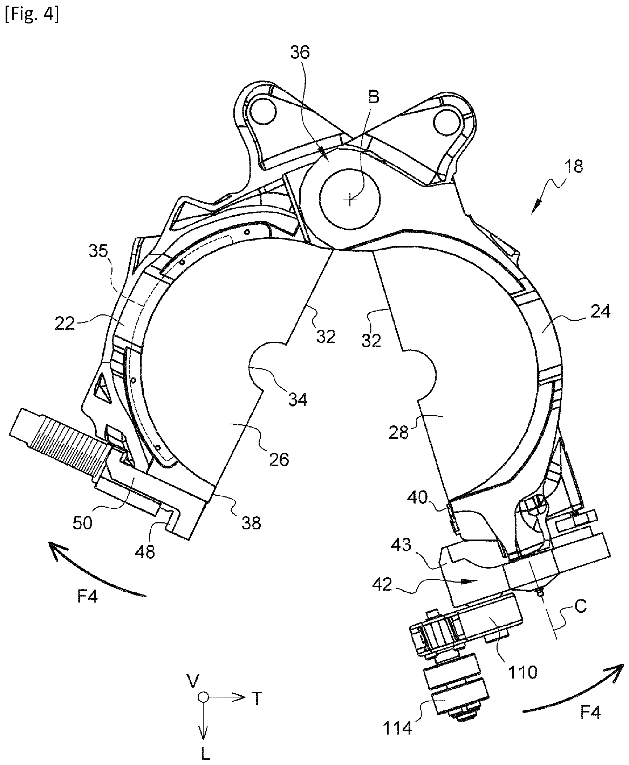

Chaque support 22, 24 de moule est destiné à recevoir une partie 26, 28 d'un moule, comme illustré aux figures 3 et 4. Un moule présente en effet au moins deux parties 26, 28 hémicylindriques présentant chacune une face 30 externe verticale cylindrique, destinée à être tournée vers le support 22, 24 de moule associé, et une face 32 interne verticale plane qui comporte une demi-empreinte du récipient à former. Lorsque les deux parties 26, 28 de moule sont jointes par leurs faces 32 internes définissant ainsi un plan "P" de joint longitudinal vertical. Les deux parties 26, 28 de moule délimitent ainsi une cavité formant l'empreinte du récipient à former. Cette cavité débouche verticalement vers le haut par un passage 34 pour un col du récipient ou de la préforme.

Les supports 22, 24 de moule sont montés mobiles sur le carrousel 12 entre une position ouverte dans laquelle les deux parties 26, 28 de moule sont écartées l'une de l'autre, comme représenté à la figure 4, et une position fermée dans laquelle les deux parties 26, 28 de moule sont jointes par leur face 32 interne, comme illustré à la figure 3.

Pour garantir que les faces 32 internes des deux parties 26, 28 de moule soient jointes correctement lors de l'opération de moulage, il est connu d'interposer une chambre 35 de compensation entre la face 30 externe d'au moins une partie 26 de moule et son support 22 de moule. Ladite partie 26 de moule est montée coulissante transversalement avec un faible débattement entre une position rétractée transversalement vers le support 22 de moule et une position étendue en direction de l'autre partie 28 de moule. Lors d'une opération de soufflage, cette chambre 35 de compensation est alimentée avec un fluide sous pression comprimé pour pousser la partie 26 de moule vers sa position étendue.

Les supports 22, 24 de moule sont ici montés pivotants l'un par rapport à l'autre autour d'une charnière 36 d'axe "B" de charnière vertical. La charnière 36 est ici agencée à proximité de bords verticaux arrière des supports 22, 24 de moule.

Chaque support 22, 24 de moule comporte aussi un bord 38, 40 vertical libre opposé à la charnière 36. Les deux bords 38, 40 libres sont écartés en position ouverte des supports 22, 24 de moule, comme représenté par les flèches F4 à la figure 4, et jointifs en position fermée des supports 22, 24 de moule, comme représenté à la figure 3. En position fermée, les bords 38, 40 libres et l'axe "B" de charnière sont agencés dans le plan "P" de joint du moule.

La charnière 36 est agencé du côté de l'axe "A" de rotation du carrousel 12, tandis que les bords 38, 40 libres sont agencés transversalement vers l'extérieur du carrousel 12 comme cela est illustré à la figure 1.

Les supports 22, 24 de moule sont automatiquement commandés, par exemple par came, entre leur position fermée et une position ouverte par des moyens mécaniques de commande. Ces moyens de commande sont bien connus et ne font pas l'objet de la présente invention. Ils ne seront donc pas décrits plus en détails par la suite.

Pour garantir que les supports 22, 24 de moule garderont leur position fermée durant l'opération de soufflage, ils sont équipés d'un dispositif 42 de verrouillage des supports 22, 24 de moule en position fermée. Le dispositif 42 de verrouillage doit être suffisamment robuste et stable pour résister à la force de réaction très importante produite lors de la mise sous pression de la chambre 35 de compensation en cours de moulage.

Le dispositif 42 de verrouillage des supports 22, 24 de moule en position fermée comporte au moins un crochet 44 de verrouillage.

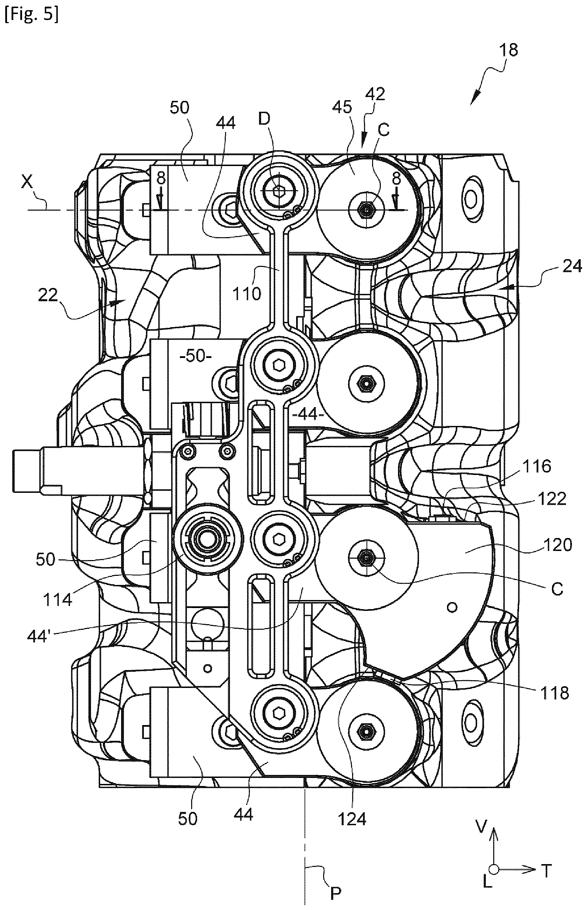

Comme cela est représenté aux figures 5 à 7, le dispositif 42 de verrouillage comporte ici une pluralité de crochets 44 de verrouillage sensiblement identiques, par exemple quatre crochets 44 de verrouillage. On ne décrira par la suite qu'un seul des crochets 44 de verrouillage. Un seul crochet 44' de verrouillage parmi les quatre crochets 44 de verrouillage présente ici une fonction supplémentaire par rapport aux autres crochets 44 de verrouillage comme cela sera expliqué par la suite. Ce crochet 44' de verrouillage différent présente néanmoins les mêmes éléments structurels et les mêmes fonctions que les autres crochets 44 de verrouillage.

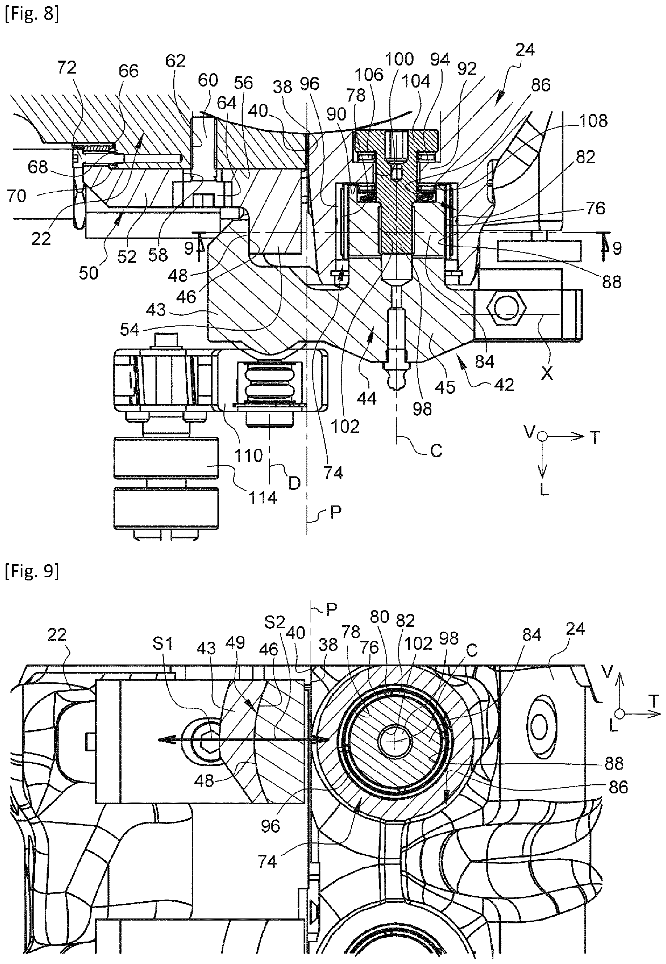

Le crochet 44 de verrouillage présente la forme d'un bras dont une première extrémité 43 crochue libre est équipée d'une face 46 d'accrochage, comme cela est particulièrement visible aux figures 3 et 8. Le crochet 44 de verrouillage est montée pivotant sur le deuxième support 24 de moule autour d'un axe "C" de pivotement décalé par rapport à l'extrémité 43 crochue. Le crochet 44 de verrouillage est ici monté pivotant sur le deuxième support 24 de moule par une deuxième extrémité 45. Selon les enseignements de l'invention, l'axe "C" de pivotement du crochet 44 de verrouillage est situé dans un plan perpendiculaire à l'axe "B" de charnière des supports 22, 24 de moule. Plus particulièrement, l'axe "C" de pivotement du crochet 44 de verrouillage est ici agencé parallèlement au plan "P" de joint lorsque les supports 22, 24 de moule occupent leur position fermée, comme cela est représenté à la figure 3. L'axe "C" s'étend ainsi selon une direction longitudinale. La face 46 d'accrochage du crochet 44 de verrouillage est tournée vers l'axe "C" de pivotement du crochet 44 de verrouillage.

Le crochet 44 de verrouillage est plus particulièrement monté pivotant à proximité du bord 40 libre du deuxième support 24 de moule.

Le dispositif 42 de verrouillage comporte aussi une face 48 de blocage qui est montée fixe sur le premier support 22 de moule. La face 48 de blocage est agencée à la même hauteur verticale que l'axe "C" de pivotement du crochet 44 de verrouillage. Elle est tournée selon la direction transversale dans un sens opposé à l'axe "C" de pivotement.

Le crochet 44 de verrouillage est ainsi pivotant entre :
- une position verrouillée dans laquelle l'extrémité 43 crochue du crochet 44 de verrouillage est accrochée transversalement derrière la face 48 de blocage pour empêcher l'ouverture des support 22, 24 de moule par butée transversale entre la face 46 d'accrochage et la face 48 de blocage, comme cela est illustré aux figures 3, 5, 8 et 9 ; et
- une position déverrouillée dans laquelle le crochet 44 de verrouillage est pivoté pour escamoter la face 46 d'accrochage verticalement, vers le haut ou vers le bas, par rapport à la face 48 de blocage pour autoriser l'ouverture des supports 22, 24 de moule, comme cela est illustré aux figures 4, 6, 7 et 10.

La face 46 d'accrochage est de préférence en contact avec la face 48 de blocage lorsque les supports 22, 24 de moule sont en position fermée afin d'éviter tout débattement entre les supports 22, 24 de moule lorsqu'ils sont verrouillés en position fermée. Avantageusement, la face 46 d'accrochage et la face 48 de blocage exercent l'une sur l'autre des efforts "S1" et "S2" de réaction globalement transversaux lorsqu'un effort d'ouverture est exercé sur les supports 22, 24 de moule verrouillés en position fermée, comme cela est illustré à la figure 9.

L'effort d'ouverture a en effet tendance à écarter les bords 38, 40 libres transversalement. Ainsi, l'effort d'ouverture transmis à chaque bord 38, 40 libre présente une composante transversale orientée à l'opposé de l'autre support 22, 24 de moule. Le crochet 44 de verrouillage étant monté pivotant autour d'un axe "C" de pivotement orthogonal à la direction verticale, et le point d'application de l'effort "S1" de réaction étant sensiblement aligné avec l'axe "C" de pivotement, les efforts d'ouverture ne produit créent aucun pivotement dans le crochet 44 de verrouillage dans sa position verrouillée.

Pendant le fonctionnement en production de l'unité 18 de moulage, le crochet 44 de verrouillage est monté uniquement pivotant autour de son axe "C" de pivotement par rapport au deuxième support 24 de moule, tandis que la face 48 de blocage est montée fixe sur le premier support 22 de moule. Pour permettre le pivotement du crochet 44 de verrouillage entre ses deux positions verrouillée et déverrouillée tout en assurant un verrouillage efficace en fonctionnement, au moins l'une parmi la face 46 d'accrochage et la face 48 de blocage présente une courbure permettant au crochet 44 de verrouillage de pivoter derrière la face 48 de blocage en restant au contact l'un de l'autre.

Lors du fonctionnement du moule, la face 46 d'accrochage est reçue derrière la face 48 de blocage avec un jeu transversal qui est inférieur au débattement de la partie 26 de moule coulissante lorsque les deux supports de moule sont en position fermée. Ainsi, en réaction à la mise sous pression de la chambre 35 de compensation, les deux supports de moules sont légèrement écartés l'un de l'autre jusqu'à ce que la face 46 d'accrochage soit transversalement plaquée contre la face 48 de blocage, les deux parties 26, 28 de moule demeurant fermement plaquées l'une contre l'autre le long de leur plan de joint.

Par exemple, la face 48 de blocage présente une forme de secteur cylindrique convexe qui est tournée à l'opposé de l'axe "C" de pivotement et qui est définie par translation d'une droite génératrice parallèle à l'axe "C" de pivotement. En position verrouillée du crochet 44 de verrouillage, la face 48 de blocage est ainsi en contact avec la face 46 d'accrochage le long d'une zone 49 de contact qui est formée par une ligne longitudinale de contact ou par une surface de contact, de préférence cylindrique. Le barycentre de la zone 49 de contact est sensiblement à la même hauteur verticale que l'axe "C" de pivotement du crochet 44 de verrouillage.

Le rayon de courbure du secteur cylindrique convexe est inférieur ou égal à la distance entre l'axe "C" de pivotement et la zone 49 de contact entre la face 46 d'accrochage et la face 48 de blocage en position verrouillée du crochet 44 de verrouillage.

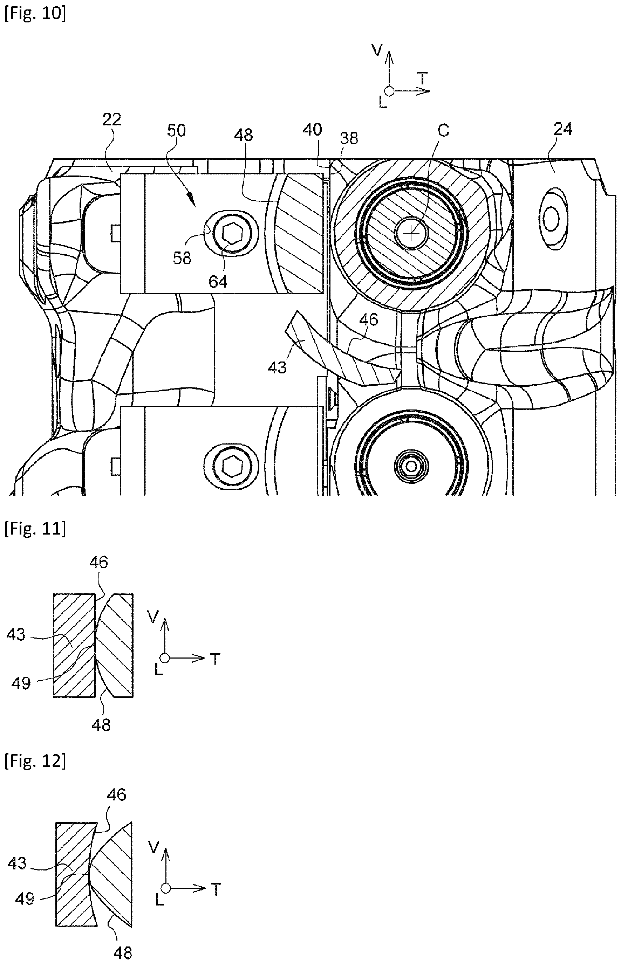

Dans ce cas, la face 46 d'accrochage peut présenter une forme plane ou une forme convexe comme cela est représenté à la figure 11.

Avantageusement, la face 46 d'accrochage présente une forme de secteur cylindrique concave qui est tourné vers l'axe "C" de pivotement et qui est défini par la translation d'une droite génératrice parallèle à l'axe "C" de pivotement. Le rayon de courbure de la face 46 d'accrochage est alors supérieur ou égal à la distance entre l'axe "C" de pivotement et le barycentre de la zone 49 de contact entre la face 46 d'accrochage et la face 48 de blocage en position verrouillée du crochet 44 de verrouillage. Cette configuration dans laquelle la face 48 de blocage est convexe et la face 46 d'accrochage est concave permet de stabiliser le crochet 44 de verrouillage dans sa position verrouillée lorsqu'un effort d'ouverture est appliqué aux supports 22, 24 de moule en agissant comme un moyen d'autocentrage selon une direction verticale de la face 46 d'accrochage par rapport à la face 48 de blocage.

La face 46 d'accrochage présente par exemple un rayon de courbure plus grand que le rayon de courbure de la face 48 de blocage de manière qu'en position verrouillée, la zone 49 de contact présente la forme d'une ligne longitudinale de tangence comme cela est illustré à la figure 12.

Selon un mode de réalisation particulier de l'invention, représenté à la figure 9, la face 46 d'accrochage et la face 48 de blocage présentent toutes les deux une forme de secteur cylindrique de révolution d'axe confondu avec l'axe "C" de pivotement du crochet 44 de verrouillage. Ainsi, la zone 49 de contact est formée par toute la surface de la face 48 de blocage et non plus par une seule ligne comme c'est le cas des modes de réalisation représentés aux figures 11 et 12. Ainsi, l'appui est réparti sur toute leur surface.

Il est bien entendu possible de prévoir des modes de réalisation intermédiaires dans lesquels la zone 49 de contact forme une portion de surface de la face 48 de blocage plus étendue qu'une simple ligne.

Pour la suite de la description, on définit un axe principal "X" rectiligne du crochet 44 de verrouillage qui s'étend perpendiculaire à l'axe "C" de pivotement, depuis l'axe "C" de pivotement globalement jusqu'au centre de la face 46 d'accrochage, comme cela est représenté à la figure 8. L'axe "X" principal présente ici une orientation orthogonale à la face 46 d'accrochage.

Dans le mode de réalisation représenté aux figures, le crochet 44 de verrouillage s'étend le long de son axe "X" principal. Ceci permet de conférer au crochet 44 de verrouillage une grande résistance à la traction en position verrouillée.

Dans le mode de réalisation représenté aux figures, en position verrouillée, l'axe "X" principal du crochet 44 de verrouillage s'étend dans une direction transversale, orthogonale au plan "P" de joint, depuis l'axe "C" de pivotement. Ceci permet d'aligner l'effort "S1" de réaction exercé par la face 48 de blocage sur la face 46 d'accrochage et l'axe "C" de pivotement dans un même plan transversal longitudinal. Ainsi, un effort d'ouverture appliqué aux supports 22, 24 de moule ne provoque sensiblement aucun pivotement du crochet 44 de verrouillage.

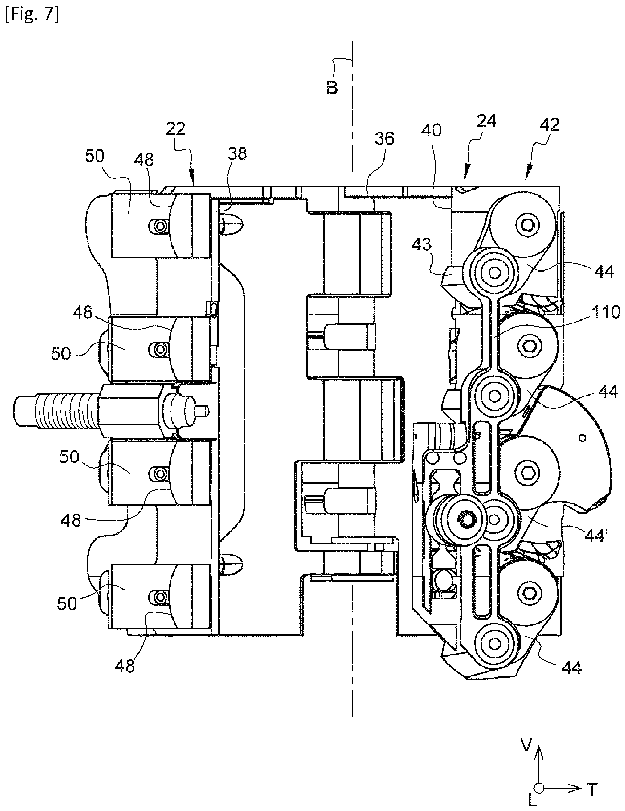

Pour permettre de libérer le passage sur toute la largeur de l'intervalle formé entre les deux bords 38 et 40 libres des supports 22, 24 de moule en position ouverte, comme illustré aux figures 4 et 7, la face 48 de blocage est avantageusement agencée entièrement en deçà du bord 38 libre du premier support 22 de moule selon une direction transversale. Ainsi, en position fermée des supports 22, 24 de moule, les faces 48 de blocage sont situées du même côté que la partie 26 de moule portée par le premier support 22 de moule par rapport au plan "P" de joint.

De même, l'axe "C" de pivotement du crochet 44 de verrouillage est décalé transversalement par rapport au bord 38 libre du deuxième support 24 de moule de manière que :
- en position verrouillée, l'extrémité 43 crochue s'étendent transversalement de l'autre côté du plan "P" de joint des supports 22, 24 de moule en position fermée par rapport à l'axe "C" de pivotement, comme cela est par exemple visible à la figure 9 ;
- en position déverrouillée, l'extrémité 43 crochue soit escamotée transversalement au moins en majeure partie en deçà du bord 40 libre du deuxième support 24 de moule, comme cela est par exemple visible à la figure 10.

Pour permettre d'ajuster la position transversale de la face 46 d'accrochage et de la face 48 de blocage l'une par rapport à l'autre et assurer ainsi un contact entre lesdites deux faces en position verrouillée, il est prévu qu'au moins l'un parmi l'axe "C" de pivotement du crochet 44 de verrouillage et la face 48 de blocage soit réglable en position transversale sur leur support 22, 24 de moule respectifs.

Comme cela sera décrit par la suite, dans le mode de réalisation représenté aux figures, l'axe "C" de pivotement du crochet 44 de verrouillage est monté fixe et non réglable en position sur le deuxième support 24 de moule.

La face 48 de blocage est donc portée par une pièce qui est fixée de manière ajustable en position transversale sur le premier support 22 de moule. Il s'agit ici d'une équerre 50 qui présente une patte 52 de fixation transversale depuis une extrémité transversale de laquelle s'étend longitudinalement une aile 54 qui porte la face 48 de blocage, comme cela est particulièrement visible à la figure 8.

La patte 52 de fixation est reçue contre un méplat 56 du premier support 22 de moule. La patte 52 de fixation comporte un orifice 58 central oblong transversalement qui est destiné à recevoir une vis 60 de fixation d'axe longitudinal. Le méplat 56 est percé d'un taraudage 62 dans lequel un tronçon fileté de la vis 60 est vissé. L'orifice 58 oblong permet de faire coulisser transversalement l'équerre 50 par rapport au premier support 22 de moule lorsque la vis 60 est desserrée. Lorsque la vis 60 est serrée, l'équerre 50 est fixée en position par serrage entre une tête 64 de la vis 60 et le méplat 56.

Comme illustré à la figure 8, pour permettre un ajustement fin de la position transversale de l'équerre 50, il est prévu que l'extrémité transversale libre de la patte 52 de fixation présente un rebord 66 qui s'étend longitudinalement vers l'arrière. Le rebord 66 est destiné à prendre appui contre un bord 68 du méplat 56 agencé transversalement en vis-à-vis. Une entretoise 70 est intercalée entre le rebord 66 et le bord 68 du méplat 56 pour ajuster finement la position de l'équerre 50. Une vis 72 a été ajoutée pour éviter tout mouvement entre l'équerre 50 et le premier support 22 de moule durant le serrage de la vis 60 de fixation.

Chaque crochet 44 de verrouillage est monté pivotant sur le deuxième support 24 de moule par l'intermédiaire d'un palier 74 à roulement, comme cela est particulièrement visible aux figures 8 et 9. Le palier 74 à roulement comporte ainsi une piste 76 annulaire intérieure de roulement et une piste 78 annulaire extérieure de roulement qui sont montées concentriques. La piste 78 extérieure est tournée radialement vers la piste 76 intérieure, tandis que la piste 76 intérieure est tournée radialement vers la piste 78 extérieure. Des éléments 80 roulants, tels que des rouleaux cylindriques, des rouleaux coniques ou des billes, sont interposés radialement entre la piste 76 intérieure et la piste 78 extérieure pour permettre la rotation d'une piste 76, 78 par rapport à l'autre par roulement des éléments 80 roulants sur les pistes 76, 78 de roulement. Pour des raisons de clarté des dessins, seule une partie des éléments 80 roulants ont été représentés à la figure 9. Les éléments 80 roulant sont généralement maintenus circonférentiellement à distance les uns des autres par une cage 82 annulaire.

Dans le mode de réalisation représenté aux figures 8 et 9, la piste 76 intérieure est agencée autour d'un arbre 84 longitudinal solidaire en pivotement avec le crochet 44 de verrouillage, tandis que la piste 78 extérieure est agencée fixe à l'intérieur d'un logement 86 débouchant longitudinalement vers l'avant du deuxième support 24 de moule.

Le logement 86 présente une paroi 88 latérale cylindrique et un fond 90 arrière. Il débouche longitudinalement vers l'avant. Le fond 90 forme la face avant d'une cloison 92 verticale transversale du support 24 de moule. La cloison 92 présente une face 94 arrière opposée au fond 90. Le logement 86 est destiné à recevoir ledit arbre 84 par insertion longitudinale vers l'arrière.

La piste 76 intérieure est ici formée directement sur une face périphérique cylindrique de l'arbre 84. En variante non représentée, la piste 76 intérieure est portée par une bague intérieure qui est montée solidaire en rotation sur l'arbre 84.

La piste 78 extérieure est ici portée par une bague 96 extérieure du palier 74 à roulement qui est logée dans le logement 86.

En variante non représentée de l'invention, la piste 78 extérieure est formée directement dans une paroi du logement 86.

En variante non représentée, par inversion mécanique, l'arbre 84 est solidaire du deuxième support 24 de moule tandis que le logement 86 est solidaire du crochet 44 de verrouillage.

Le palier 74 à roulement est sélectionné pour nécessiter peu d'entretien pour fonctionner. Il s'agit par exemple d'un palier à roulement graissés à vie ou d'un palier de roulement à graissage par garnissage au montage. A cet effet, le palier 74 à roulement comporte des composants pour enfermer les éléments 80 roulants et les pistes 76, 78 de roulement avec une réserve de produit lubrifiant tel que de la graisse. Les paliers 74 de roulement sont par exemple enfermés par un couvercle (non représenté) dans le logement 86, pour permettre leur entretien de temps en temps. En variante, la cage est réalisée en un matériau imbibé de fluide lubrifiant. De tels paliers 74 à roulement doivent être entretenus environ une fois par an, voire remplacés lorsqu'il s'agit de paliers 74 à roulement graissés à vie, tandis qu'un dispositif de verrouillage de l'état de la technique doit être entretenu et lubrifié une fois par semaine lorsque les unités 18 de moulage produisent des récipients en grandes séries.

En outre, les crochets ne nécessitent qu'un graissage occasionnel à une fréquence bien inférieure à celle des dispositifs de l'état de la technique, par exemple une fois par an.

L'arbre 84 du crochet 44 de verrouillage est ici monté fixe longitudinalement sur le crochet 44 de verrouillage. L'arbre 84 est par exemple réalisé en une seule pièce avec le crochet 44 de verrouillage. L'arbre 84 est maintenu longitudinalement par rapport au deuxième support 24 de moule par l'intermédiaire d'une vis 98 de fixation d'axe longitudinal confondu avec l'axe "C" de pivotement qui est enfilée longitudinalement vers l'avant à travers un orifice 100 traversant la cloison 92 du logement 86. L'extrémité filetée avant de la vis 98 est vissée dans un taraudage 102 central de l'arbre 84. La cloison 92 du logement 86 est ainsi comprise longitudinalement entre une tête 104 arrière de la vis 98 et une face d'extrémité arrière de l'arbre 84. La tête 104 de la vis 98 permet de retenir l'arbre 84 dans le logement 86 par contact avec la face 94 arrière de la cloison 92.

Pour éviter que la vis 98 de fixation ne grippe le pivotement du crochet 44 de verrouillage par frottement avec le deuxième support 24 de moule, une première butée 106 de roulement est interposée longitudinalement entre la tête 104 de vis et la face 94 arrière de la cloison 92, et une deuxième butée 108 de roulement est interposée longitudinalement entre le fond 90 du logement 86 et la face d'extrémité arrière de l'arbre 84.

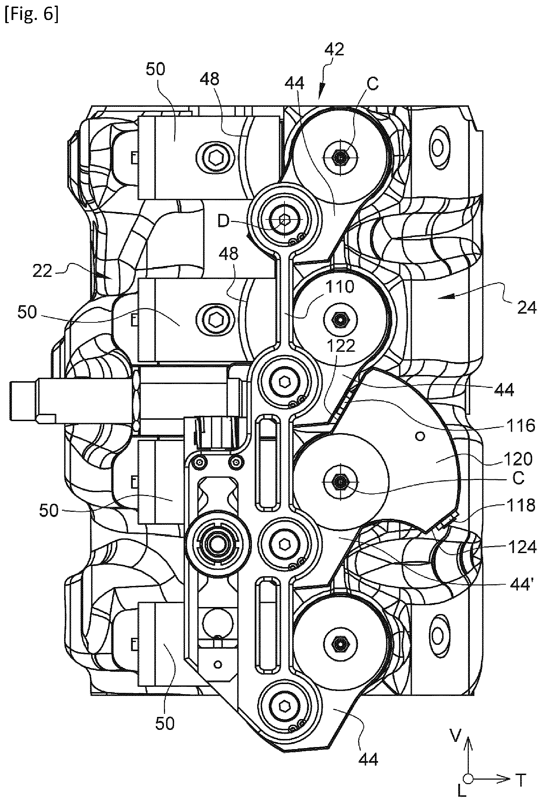

En se reportant à nouveau aux figures 5 et 6, les quatre crochets 44, 44' de verrouillage sont répartis verticalement le long du bord 40 libre du deuxième support 24 de moule. Les axes "C" de pivotement des crochets 44, 44' de verrouillage sont agencés dans un même plan vertical longitudinal, parallèlement au plan "P" de joint.

Pour permettre leur commande simultanée entre leur position verrouillée et leur position déverrouillée, les crochets 44, 44' de verrouillage sont liés en mouvement par l'intermédiaire d'une bielle 110 verticale qui est reliée au corps de chacun des crochets 44 de verrouillage de manière excentrée transversalement par rapport aux axes "C" de pivotement. La bielle 110 est ainsi montée pivotante sur chaque crochet 44 de verrouillage autour d'un axe "D" longitudinal parallèle à l'axe "C" de pivotement dudit crochet 44 de verrouillage. Le déplacement vertical de la bielle 110 entraîne conjointement ainsi tous les crochets 44 de verrouillage en pivotement dans une même position angulaire autour de leurs axes "C" de pivotement respectifs. Les axes "X" principaux de chacun des crochets 44 de verrouillage sont ainsi en permanence parallèles les uns aux autres.

Le coulissement de la bielle 110 est destiné à être commandé par une came 112 qui est montée fixe sur la base 14 du carrousel 12, comme cela est schématiquement illustré à la figure 2. A cet effet, la bielle 110 comporte un galet 114 suiveur de came d'axe de rotation longitudinal qui est destiné à coopérer avec la came 112 de commande pour commander les crochets 44 de verrouillage simultanément entre leur position verrouillée et leur position déverrouillée pendant la rotation du carrousel 12 autour de son axe "A".

L'un des crochets 44' de verrouillage, dit crochet 44' de butée, comporte des moyens de butée pour bloquer les crochets 44 de verrouillage dans leur position verrouillée, d'une part, et dans leur position déverrouillée, d'autre part. Le crochet 44' de butée est agencé verticalement entre deux autres crochets 44 de verrouillage adjacents. Il s'agit ici du deuxième crochet 44' de verrouillage en partant du bas.

Outre les éléments structurels déjà décrits qui sont identiques à ceux de tous les autres crochets 44 de verrouillage, le crochet 44' de butée comporte un premier élément 116 de butée en position verrouillée et un deuxième élément 118 de butée en position déverrouillée qui sont agencés de manière excentrée par rapport à l'axe "C" de pivotement. Les éléments 116, 118 de butée sont ici agencés transversalement d'un côté opposé l'extrémité 43 crochue par rapport à l'axe "C" de pivotement du crochet 44' de butée. Les éléments 116, 118 de butée sont orientés selon une direction circonférentielle par rapport à l'axe "C" de pivotement de manière opposée l'un par rapport à l'autre.

L'élément 118 de butée en position verrouillée est destiné à venir en contact avec l'un des crochets 44 de verrouillage directement adjacent verticalement lorsque les crochets 44 de verrouillage occupent leur position verrouillée. Dans l'exemple représenté à la figure 5, l'élément 118 de butée en position verrouillée vient buter contre une partie latérale du crochet 44 de verrouillage situé directement en dessous du crochet 44' de butée.

De même, l'élément 116 de butée en position déverrouillée est destiné à venir en contact avec l'autre des crochets 44 de verrouillage directement adjacent verticalement lorsque les crochets 44 de verrouillage occupent leur position déverrouillée. Dans l'exemple représenté à la figure 6, l'élément 116 de butée en position déverrouillée vient buter contre une partie latérale du crochet 44 de verrouillage situé directement au-dessus du crochet 44' de butée.

Les éléments 116, 118 de butée sont ici portés par un bras 120 qui s'étend radialement depuis l'arbre 84 du crochet 44' de butée. Le bras 120 présente globalement une forme de secteur angulaire de disque centré sur l'axe "C" de pivotement. Le bras 120 est ainsi délimité dans une direction circonférentielle par rapport à l'axe "C" de pivotement par une première face 122 latérale tournée vers le haut et par une deuxième face 124 latérale tournée vers le bas. L'élément 116 de butée en position déverrouillée est ici agencé sur la première face 122 latérale tandis que l'élément 118 de butée en position verrouillée est agencé sur la deuxième face 124 latérale.

En variante non représentée de l'invention, les crochets sont limités en coulissement par coopération entre des faces de butée de la bielle avec des faces d'arrêt du deuxième support de moule.

L'unité 18 de moulage est ainsi équipée d'un dispositif de verrouillage qui permet de verrouiller les supports 22, 24 de moule en position fermée de manière stable. Les efforts d'ouverture des moules ne provoquent sensiblement aucun couple de pivotement des crochets 44 de verrouillage vers leur position déverrouillée.

En outre, un tel dispositif de verrouillage dans sa position déverrouillée permet de libérer totalement l'intervalle entre les deux supports 22, 24 de moule en position ouverte pour permettre la sortie de récipients à l'issue de leur formage. Cela permet d'éjecter les récipients formés sans avoir à écarter trop largement les supports 22, 24 de moule. Il est ainsi possible de disposer un plus grand nombre d'unités 18 de moulage sur le carrousel 12 par rapport à des dispositifs de verrouillage qui nécessitent une plus grande ouverture des unités 18 de moulage.

De plus, la commande des crochets 44 de verrouillage entre leur position ouverte et leur position fermée est effectuée très simplement au moyen d'une came 112 qui agit verticalement, c'est-à-dire dans le même sens que l'axe "A" de rotation du carrousel 12. Ainsi, les galets 114 suiveurs de came permettent de commander le dispositif de verrouillage sans avoir à lutter contre la force centrifuge créée par la rotation rapide du carrousel 12 en production normale.

## Revendications

1. Unité (18) de moulage de récipients, notamment par soufflage de préformes en matériau thermoplastique, qui comporte
- un premier support (22) de moule et un deuxième support (24) de moule qui sont destinés à porter chacun une partie (26, 28) d'un moule, les supports (22, 24) de moule étant articulés l'un par rapport à l'autre autour d'un axe (B) vertical de charnière agencé le long d'un bord vertical arrière des supports (22, 24) de moule entre une position ouverte dans laquelle des bords (38, 40) libres verticaux avant des supports (22, 24) de moule sont écartés transversalement l'un de l'autre, et une position fermée dans laquelle lesdits bords (38, 40) libres sont en contact l'un de l'autre sur un plan (P) de joint longitudinal vertical ;
- un dispositif (42) de verrouillage des supports (22, 24) de moule en position fermée qui comporte au moins un crochet (44, 44') de verrouillage dont une extrémité (43) crochue libre est équipée d'une face (46) d'accrochage, l'au moins un crochet (44, 44') de verrouillage étant monté pivotant autour d'un axe (C) de pivotement sur le deuxième support (24) de moule entre une position verrouillée dans laquelle la face (46) d'accrochage est accrochée transversalement derrière une face (48) de blocage fixe du premier support (22) de moule pour empêcher l'ouverture des support (22, 24) de moule par contact transversal et une position déverrouillée dans laquelle l'au moins un crochet (44, 44') de verrouillage est pivoté pour escamoter la face (46) d'accrochage par rapport à la face (48) de blocage pour autoriser l'ouverture des supports (22, 24) de moule ; **caractérisé en ce que** l'axe (C) de pivotement de l'au moins un crochet (44, 44') de verrouillage est situé dans un plan perpendiculaire à l'axe (B) de charnière des moules.

2. Unité (18) de moulage selon la revendication 1 **caractérisée en ce que** l'axe de pivotement de chaque crochet (44, 44') est agencé parallèlement au plan (P) de joint des supports (22, 24) de moule.

3. Unité (18) de moulage selon l'une quelconque des revendications précédentes, **caractérisée en ce que** chaque crochet (44, 44') de verrouillage présente un axe (X) principal qui s'étend perpendiculairement à l'axe (C) de pivotement jusqu'à l'extrémité (43) crochue, et **en ce qu'**en position verrouillée, l'axe (X) principal de chaque crochet (44, 44') de verrouillage s'étend dans une direction transversale, orthogonale au plan (P) de joint, depuis l'axe (C) de pivotement.

4. Unité (18) de moulage selon la revendication précédente, **caractérisée en ce qu'**en position verrouillée, l'extrémité (43) crochue s'étend transversalement de l'autre côté du plan (P) de joint des supports (22, 24) de moule en position fermée par rapport à l'axe (C) de pivotement.

5. Unité (18) de moulage selon l'une quelconque des revendications précédentes, **caractérisée en ce que** la face (46) d'accrochage de chaque crochet (44, 44') présente une forme de secteur cylindrique concave qui est tournée vers l'axe (C) de pivotement et qui est défini par translation d'une droite génératrice parallèle à l'axe (C) de pivotement.

6. Unité (18) de moulage selon l'une quelconque des revendications précédentes, **caractérisée en ce que** la face (48) de blocage présente une forme de secteur cylindrique convexe qui est tournée à l'opposé de l'axe (C) de pivotement et qui est définie par translation d'une droite génératrice parallèle à l'axe (C) de pivotement.

7. Unité (18) de moulage selon la revendication 6 prise en combinaison avec la revendication 5, **caractérisée en ce que** la face (46) d'accrochage et la face (48) de blocage présentent toutes les deux une forme de secteur cylindrique de révolution d'axe confondu avec l'axe (C) de pivotement de chaque crochet (44, 44').

8. Unité (18) de moulage selon la revendication 6 prise en combinaison avec la revendication 5, **caractérisée en ce que** la face (46) d'accrochage présente un rayon de courbure plus grand que le rayon de courbure de la face (48) de blocage de manière qu'en position verrouillée, la face (46) d'accrochage soit en contact avec la face (48) de blocage le long d'une zone (49) de contact formée uniquement par une ligne longitudinale de tangence.

9. Unité (18) de moulage selon l'une quelconque des revendications précédentes, **caractérisée en ce que** la face (48) de blocage est portée par une pièce (50) qui est fixée de manière ajustable en position transversale sur le premier support (22) de moule.

10. Unité (18) de moulage selon l'une quelconque des revendications précédentes, **caractérisé en ce qu'**elle comporte une pluralité de crochets (44, 44') répartis verticalement le long du bord (40) libre du deuxième support (24) de moule et coopérant chacun avec une face (48) de blocage associée du premier support (22) de moule.

11. Unité (18) de moulage selon la revendication précédente, **caractérisée en ce que** les axes (C) de pivotement des crochets (44, 44') sont agencés dans un même plan vertical longitudinal.

12. Unité (18) de moulage selon la revendication précédente, **caractérisée en ce que** les crochets (44, 44') sont liés en mouvement par l'intermédiaire d'une bielle (110) verticale qui est reliée à un corps de chacun des crochets (44, 44') de manière excentrée transversalement par rapport aux axes (C) de pivotement.

13. Unité (18) de moulage selon la revendication précédente, **caractérisée en ce que** la bielle (110) comporte un galet (114) suiveur de came d'axe de rotation longitudinal qui est destiné à coopérer avec une came de commande pour commander les crochets (44, 44') simultanément entre leur position verrouillée et leur position déverrouillée.

14. Unité (18) de moulage selon l'une quelconque des revendications précédentes, **caractérisée en ce que** chaque crochet (44, 44') est monté pivotant sur le deuxième support (24) de moule par l'intermédiaire d'un palier (74) à roulement.

## Patentansprüche

1. Formeinheit (18) zum Formen von Behältern, insbesondere durch Blasformen von Vorformlingen aus thermoplastischem Material, welche umfasst:
- einen ersten Formträger (22) und einen zweiten Formträger (24), welche dazu bestimmt sind, jeweils einen Teil (26, 28) einer Form zu tragen, wobei die Formträger (22, 24) um eine vertikale Scharnierachse (B), die entlang eines hinteren vertikalen Randes der Formträger (22, 24) angeordnet ist, relativ zueinander verschwenkbar sind zwischen einer geöffneten Position, in welcher die vorderen vertikalen freien Ränder (38, 40) der Formträger (22, 24) in Querrichtung voneinander beabstandet sind, und einer geschlossenen Position, in welcher sich die freien Ränder (38, 40) entlang einer vertikalen, längs verlaufenden Trennebene (P) in Kontakt miteinander befinden;
- eine Vorrichtung (42) zur Verriegelung der Formträger (22, 24) in der geschlossenen Position, welche mindestens einen Verriegelungshaken (44, 44') umfasst, von dem ein freies hakenförmiges Ende (43) mit einer Einhakfläche (46) ausgestattet ist, wobei der mindestens eine Verriegelungshaken (44, 44') am zweiten Formträger (24) um eine Schwenkachse (C) schwenkbar zwischen einer verriegelten Position, in welcher die Einhakfläche (46) quer hinter einer ortsfesten Sperrfläche (48) des ersten Formträgers (22) eingehakt ist, um das Öffnen der Formträger (22, 24) durch Querkontakt zu verhindern, und einer entriegelten Position, in welcher der mindestens eine Verriegelungshaken (44, 44') geschwenkt ist, um die Einhakfläche (46) bezüglich der Sperrfläche (48) zurückzuziehen, um das Öffnen der Formträger (22, 24) zu gestatten, gelagert ist;
**dadurch gekennzeichnet, dass** sich die Schwenkachse (C) des mindestens einen Verriegelungshakens (44, 44') in einer Ebene befindet, die zur Scharnierachse (B) der Formen senkrecht ist.

2. Formeinheit (18) nach Anspruch 1, **dadurch gekennzeichnet, dass** die Schwenkachse jedes Hakens (44, 44') parallel zur Trennebene (P) der Formträger (22, 24) angeordnet ist.

3. Formeinheit (18) nach einem der vorhergehenden Ansprüche, **dadurch gekennzeichnet, dass** jeder Verriegelungshaken (44, 44') eine Hauptachse (X) aufweist, welche sich senkrecht zur Schwenkachse (C) bis zu dem hakenförmigen Ende (43) erstreckt, und dadurch, dass sich in der verriegelten Position die Hauptachse (X) jedes Verriegelungshakens (44, 44') von der Schwenkachse (C) aus in einer zur Trennebene (P) orthogonalen Querrichtung erstreckt.

4. Formeinheit (18) nach dem vorhergehenden Anspruch, **dadurch gekennzeichnet, dass** sich in der verriegelten Position das hakenförmige Ende (43) auf der anderen Seite der Trennebene (P) der Formträger (22, 24) in der geschlossenen Position, bezogen auf die Schwenkachse (C), in Querrichtung erstreckt.

5. Formeinheit (18) nach einem der vorhergehenden Ansprüche, **dadurch gekennzeichnet, dass** die Einhakfläche (46) jedes Hakens (44, 44') eine Form eines konkaven Zylindersektors aufweist, welche der Schwenkachse (C) zugewandt ist und welche durch Translation einer zur Schwenkachse (C) parallelen erzeugenden Geraden definiert ist.

6. Formeinheit (18) nach einem der vorhergehenden Ansprüche, **dadurch gekennzeichnet, dass** die Sperrfläche (48) eine Form eines konvexen Zylindersektors aufweist, welche von der Schwenkachse (C) abgewandt ist und welche durch Translation einer zur Schwenkachse (C) parallelen erzeugenden Geraden definiert ist.

7. Formeinheit (18) nach Anspruch 6 in Kombination mit Anspruch 5, **dadurch gekennzeichnet, dass** die Einhakfläche (46) und die Sperrfläche (48) alle beide eine Form eines Zylindersektors aufweisen, der ein Rotationskörper ist, dessen Achse mit der Schwenkachse (C) des jeweiligen Hakens (44, 44') zusammenfällt.

8. Formeinheit (18) nach Anspruch 6 in Kombination mit Anspruch 5, **dadurch gekennzeichnet, dass** die Einhakfläche (46) einen Krümmungsradius aufweist, der größer als der Krümmungsradius der Sperrfläche (48) ist, so dass sich in der verriegelten Position die Einhakfläche (46) mit der Sperrfläche (48) entlang eines Kontaktbereichs (49) in Kontakt befindet, der ausschließlich von einer längs verlaufenden Berührungslinie gebildet wird.

9. Formeinheit (18) nach einem der vorhergehenden Ansprüche, **dadurch gekennzeichnet, dass** die Sperrfläche (48) von einem Teil (50) getragen wird, welches in der Querposition verstellbar an dem ersten Formträger (22) befestigt ist.

10. Formeinheit (18) nach einem der vorhergehenden Ansprüche, **dadurch gekennzeichnet, dass** sie mehrere Haken (44, 44') umfasst, die vertikal entlang des freien Randes (40) des zweiten Formträgers (24) verteilt sind und jeweils mit einer Sperrfläche (48) zusammenwirken, die dem ersten Formträger (22) zugeordnet ist.

11. Formeinheit (18) nach dem vorhergehenden Anspruch, **dadurch gekennzeichnet, dass** die Schwenkachsen (C) der Haken (44, 44') in derselben vertikalen Längsebene angeordnet sind.

12. Formeinheit (18) nach dem vorhergehenden Anspruch, **dadurch gekennzeichnet, dass** die Haken (44, 44') durch eine vertikale Schubstange (110) bewegungsverbunden sind, welche mit einem Körper jedes der Haken (44, 44') exzentrisch in Querrichtung bezüglich der Schwenkachsen (C) verbunden ist.

13. Formeinheit (18) nach dem vorhergehenden Anspruch, **dadurch gekennzeichnet, dass** die Schubstange (110) eine Kurvenrolle (114) mit einer längs verlaufenden Drehachse umfasst, welche dazu bestimmt ist, mit einer Steuerkurve zusammenzuwirken, um die Haken (44, 44') gleichzeitig zwischen ihrer verriegelten Position und ihrer entriegelten Position zu steuern.

14. Formeinheit (18) nach einem der vorhergehenden Ansprüche, **dadurch gekennzeichnet, dass** jeder Haken (44, 44') über ein Wälzlager (74) schwenkbar an dem zweiten Formträger (24) gelagert ist.

## Claims

1. Moulding unit (18) for moulding containers, in particular by blow-moulding thermoplastic preforms, which comprises
- a first mould support (22) and a second mould support (24) which are intended to each support a part (26, 28) of a mould, the mould supports (22, 24) being articulated with respect to one another about a vertical hinge axis (B) arranged along a rear vertical edge of the mould supports (22, 24) between an open position in which front vertical free edges (38, 40) of the mould supports (22, 24) are moved transversely away from one another, and a closed position in which said free edges (38, 40) are in contact with one another over a vertical longitudinal parting line (P);
- a device (42) for locking the mould supports (22, 24) in the closed position that comprises at least one locking hook (44, 44'), of which a free hooked end (43) is equipped with a hooking face (46), the at least one locking hook (44, 44') being pivotably mounted about a pivot axis (C) on the second mould support (24) between a locked position in which the hooking face (46) is hooked transversely behind a fixed blocking face (48) of the first mould support (22) to prevent the opening of the mould supports (22, 24) by transverse contact, and an unlocked position in which the at least one locking hook (44, 44') is pivoted to retract the hooking face (46) with respect to the blocking face (48) in order to allow the opening of the mould supports (22, 24); **characterized in that** the pivot axis (C) of the at least one locking hook (44, 44') is situated in a plane perpendicular to the hinge axis (B) of the moulds.

2. Moulding unit (18) according to Claim 1, **characterized in that** the pivot axis of each hook (44, 44') is arranged parallel to the parting line (P) of the mould supports (22, 24).

3. Moulding unit (18) according to either one of the preceding claims, **characterized in that** each locking hook (44, 44') has a main axis (X) which extends perpendicularly to the pivot axis (C) up to the hooked end (43), and **in that**, in the locked position, the main axis (X) of each locking hook (44, 44') extends in a transverse direction, orthogonal to the parting line (P), from the pivot axis (C).

4. Moulding unit (18) according to the preceding claim, **characterized in that**, in the locked position, the hooked end (43) extends transversely on the other side of the parting line (P) of the mould supports (22, 24) in the closed position with respect to the pivot axis (C).

5. Moulding unit (18) according to any one of the preceding claims, **characterized in that** the hooking face (46) of each hook (44, 44') has the shape of a concave cylindrical sector which faces towards the pivot axis (C) and which is defined by translation of a straight line generatrix parallel to the pivot axis (C).

6. Moulding unit (18) according to any one of the preceding claims, **characterized in that** the blocking face (48) has the shape of a convex cylindrical sector which faces away from the pivot axis (C) and which is defined by translation of a straight line generatrix parallel to the pivot axis (C).

7. Moulding unit (18) according to Claim 6 taken in combination with Claim 5, **characterized in that** the hooking face (46) and the blocking face (48) both have the shape of a circular cylindrical sector of axis coincident with the pivot axis (C) of each hook (44, 44').

8. Moulding unit (18) according to Claim 6 taken in combination with Claim 5, **characterized in that** the hooking face (46) has a greater radius of curvature than the radius of curvature of the blocking face (48) such that, in the locked position, the hooking face (46) is in contact with the blocking face (48) along a contact zone (49) formed solely by a longitudinal tangential line.

9. Moulding unit (18) according to any one of the preceding claims, **characterized in that** the blocking face (48) is borne by a part (50) which is fixed adjustably in the transverse position on the first mould support (22).

10. Moulding unit (18) according to any one of the preceding claims, **characterized in that** it comprises a plurality of hooks (44, 44') distributed vertically along the free edge (40) of the second mould support (24) and each cooperating with an associated blocking face (48) of the first mould support (22).

11. Moulding unit (18) according to the preceding claim, **characterized in that** the pivot axes (C) of the hooks (44, 44') are arranged in one and the same longitudinal vertical plane.

12. Moulding unit (18) according to the preceding claim, **characterized in that** the hooks (44, 44') are coupled in movement by way of a vertical connecting rod (110) which is connected to a body of each of the hooks (44, 44') in an eccentric manner transversely with respect to the pivot axes (C).

13. Moulding unit (18) according to the preceding claim, **characterized in that** the connecting rod (110) comprises a cam follower roller (114) of longitudinal axis of rotation that is intended to cooperate with a control cam in order to cause the hooks (44, 44') to move simultaneously between their locked position and their unlocked position.

14. Moulding unit (18) according to any one of the preceding claims, **characterized in that** each hook (44, 44') is pivotably mounted on the second mould support (24) by way of a rolling bearing (74).
